**Europäisches Patentamt**

**European Patent Office**

**Office européen des brevets**

(19)

(11) Veröffentlichungsnummer: **0 023 945**
**B1**

(12) **EUROPÄISCHE PATENTSCHRIFT**

(45) Veröffentlichungstag der Patentschrift:
18.05.83

(51) Int. Cl.³: **G 03 B 23/16**

(21) Anmeldenummer: **80102146.0**

(22) Anmeldetag: **22.04.80**

(54) **Überblend-Stehbildwerfer.**

(30) Priorität: **31.07.79 DE 2930959**

(43) Veröffentlichungstag der Anmeldung:
**18.02.81 Patentblatt 81/7**

(45) Bekanntmachung des Hinweises auf die Patenterteilung:
**18.05.83 Patentblatt 83/20**

(84) Benannte Vertragsstaaten:
**AT BE CH FR GB IT LI LU NL SE**

(56) Entgegenhaltungen:
**DE-A-1 572 733**
**DE-A-1 572 738**
**DE-A-2 433 042**
**DE-B-2 259 651**

(73) Patentinhaber: **Rollei Fototechnic GmbH, Salzdahlumer Strasse 196, D-3300 Braunschweig (DE)**

(72) Erfinder: **Sobotta, Reinhard, Schreiberkamp 9, D-3300 Braunschweig (DE)**

(74) Vertreter: **Gramm, Werner, Dipl.-Ing. et al, Patentanwälte Gramm + Lins Theodor-Heuss-Strasse 2, D-3300 Braunschweig (DE)**

## Überblend-Stehbildwerfer

Die Erfindung betrifft Überblend-Stehbildwerfer, bestehend aus 2 vollständigen Bildwerfersystemen, die einseitig neben dem gemeinsamen Stabmagazin angeordnet sind, in welchem die Dias in fortlaufender Projektionsfolge enthalten sind und nach der Projektion wieder in der ursprünglichen Reihenfolge eingeordnet werden. Die seitliche Anordnung der Stabmagazine wird allgemein deswegen bevorzugt, weil hierbei das Magazin freiliegt und daher keine besonderen Vorkehrungen zum Schutz gegen die vom Bildwerfer ausgestrahlte und für die Dias nachteilige Wärme erforderlich sind. Ausserdem kann das Magazin problemlos ausgewechselt werden und Störungen beim Diawechsel, etwa durch Verklemmen der Dias, sind einfacher und schneller behebbar.

Bei Doppelbildwerfern bringt diese Magazinanordnung Probleme mit sich, weil der mittlere den aussenliegenden Bildwerfer am Zugang zu dem gemeinsamen Magazin behindert. Ohnehin werden an den Bildwechsel- und Magazinschaltmechanismus besondere Anforderungen gestellt, weil der Überblendvorgang voraussetzt, dass sich die jeweils 2 aufeinanderfolgenden Dias während der Überblendung, also in einem bestimmten Zeitintervall, ausserhalb des Magazines in den Bildfenstern der beiden Projektoren befinden müssen.

Bei einem Überblend-Doppelbildwerfer der beschriebenen Kategorie wurde ein gemeinsamer Diawechselgreifer in einer Ebene angeordnet, und die beiden Bildwerfer waren in Richtung der optischen Achse zwischen zwei Grenzlagen verschiebbar; in der hinteren Grenzlage befanden sich jeweils die Bildbühnen in der Greifer- bzw. Wechselebene, in der vorderen Grenzstellung in der Projektionsstellung, so dass die Wechselebene, also insbesondere der Durchgang des Greifers durch die Achse des dem Magazin näheren Bildwerfers zum Bildfenster des äusseren Bildwerfers freigegeben war, wenn der mittlere Bildwerfer in Projektionsstellung stand. (DE-B Nr. 2259651.)

Dabei ergab sich aufgrund der festen gemeinsamen Wechselebene zwar ein verhältnismässig einfacher Pilgerschrittantrieb des Magazintransports mit kurzen Schaltschritten; dem stand der zusätzliche Reversierantrieb für die Axialverschiebung der Bildwerfer, mindestens des mittleren Bildwerfers mit seiner verhältnismässig grossen Masse gegenüber. Da die Bewegung des Bildwerfers während der Projektion des anderen Bildwerfers ablief, mussten besondere Vorkehrungen für einen erschütterungsfreien Gang getroffen werden, um das projizierte Bild nicht zu beeinträchtigen und um auch Erschütterungen von der Lampe des belegten Bildwerfers fernzuhalten, die deren Lebensdauer herabsetzen. Auch die benötigten flexiblen, verhältnismässig hoch belasteten Leitungen zur Stromversorgung der beweglichen Lampen erforderten besondere Aufmerksamkeit.

Ausserdem mussten die Bildbühnen der beweglichen Projektoren sorgfältig auf die feststehende Wechselebene justiert werden.

Aufgabe der Erfindung ist es, diese Schwierigkeiten zu vermeiden, das gesamte Triebwerk zu vereinfachen und den Bildwerfer dadurch betriebssicherer zu machen.

Diese Aufgabe wird erfindungsgemäss dadurch gelöst, dass die beiden Bildwerfer fest und in Achsrichtung derart gestaffelt angeordnet sind, dass der Dia-Wechselgreifer-Durchgang zwischen dem Magazin und dem aussenliegenden Bildwerfer durch den dem Magazin näherer Bildwerfer stets freigegeben ist, und dass ein zusätzlicher Antrieb für das Stabmagazin oder dessen Stabmagazinführung dem Schrittschaltwerk derart überlagert ist, dass das Magazin beim Wechseln aufeinanderfolgender Dias um den Abstand der Bildwechselebenen der beiden Bildwerfer vor- und zurückbewegbar ist.

Bei einer vorteilhaften Ausführungsform der Erfindung ist das Stabmagazin über ein Ritzel gleichzeitig sowohl um den Abstand der Bildwechselebenen als auch um den Abstand für den Magazinschaltschritt vor- und zurückbewegbar. Dadurch kann ein zusätzliches Getriebe für die dem Magazinschaltschritt überlagerte Bewegung eingespart werden, denn das ohnehin vorhandene Magazinschalt-Schrittritzel übernimmt zusätzlich die Funktion, den Abstand der Bildwechselebenen auszugleichen.

In einer Weiterbildung der Erfindung ist an das Ritzel ein Schaltschrittmotor angeflanscht, der von einer entsprechenden Steuerelektronik beaufschlagt wird. Die Steuerelektronik wird wiederum über Endschalter, die den gesamten Diaüberblendvorgang eingrenzen, angesteuert.

Vorzugsweise ist die angetriebene Magazinführung längs verschiebbar am Bildwerfer gelagert und trägt ihrerseits den Magazinschaltschritt-Antrieb.

In den Zeichnungen ist eine Ausführungsform des Erfindungsgegenstandes dargestellt, und zwar zeigt im einzelnen:

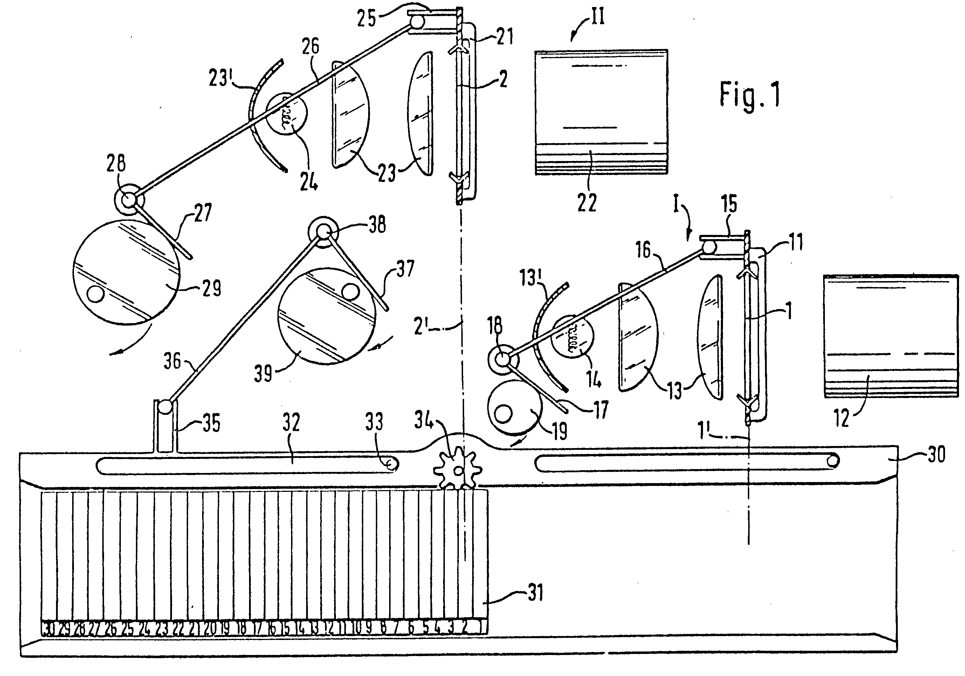

Fig. 1: die Anordnung und Zuordnung der wesentlichen Bildwerferteile in einem schematischen Grundriss,

Fig. 2: eine Frontansicht des Magazines und des Diagreifers des einen, und

Fig. 3: des anderen Teilbildwerfers,

Fig. 4: das Ablaufdiagramm eines vollständigen Wechselzyklus für ein Diapaar.

Die Bildwerfer I-14 und II-24 sind neben der Stabmagazinführung 30 auf der Grundplatte gestaffelt angeordnet, d.h. der Bildwerfer I-14 liegt in Projektionsrichtung vorn und ist dem Magazin benachbart, während der Bildwerfer II-24 in Projektionsrichtung rückwärts liegt und in einem grösseren Abstand von der Stabmagazinführung 30. Zweck dieser Anordnung ist es, dass die Bildwerfer I, II sich gegenseitig nicht stören und dass der Zugang des äusseren Bildwerfers II zum Stabmagazin stets freigehalten wird. Damit ergibt sich der Mindestabstand der Bildfensterebenen aus der Baulänge des Bildwerfersystems I-14 einschliesslich dessen Antriebes.

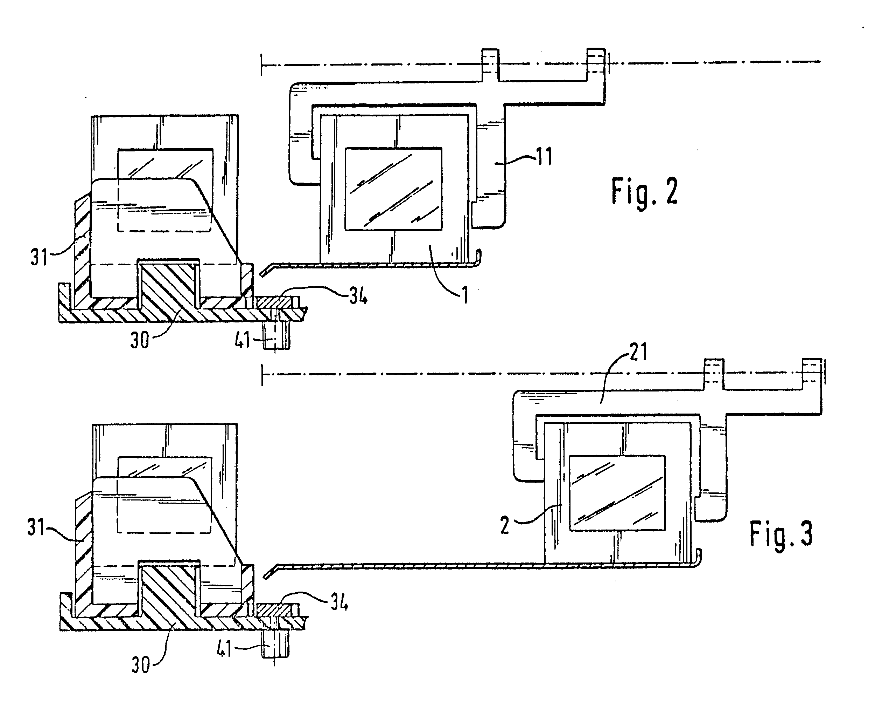

Die beiden Bildwerfer I, II sind im wesentlichen identisch bis auf die Abweichungen im Wechselschieberantrieb, die sich aus dem unterschiedlichen Abstand vom Magazin ergeben. Die Bildwerfer sind dargestellt durch die Diagreifer 11, 21 mit den Dias 1, 2, den Objektiven 12, 22, den Beleuchtungsoptiken 13, 13' und 23, 23' sowie den Lampen 14 und 24. Der Antrieb der Greifer 11, 21 ist von den Exzenterscheiben 19, 29 über die Winkelhebel 16, 17 und 26, 27 abgeleitet, die um gehäusefeste Zapfen 18, 28 schwenkbar sind und über die Führungsgabeln 15, 25 mit den Greifern 11, 21 gekuppelt sind. Die Stabmagazinführung 30 ist mittels Schlitzen 32 und Stiften 33 auf der Grundplatte verschiebbar gelagert und zwar um einen Hub, welcher dem Abstand der Diaebenen 1', 2' entspricht. Das Magazin 31 in der Stabmagazinführung 30 ist also zusätzlich um diesen Weg verschiebbar. Der Antrieb der Stabmagazinführung 30 erfolgt durch den an der Gabel 35 angreifenden Winkelhebel 36, 37, der durch die Exzenterkurve 39 betätigt wird. Das Ritzel 34 und dessen Schrittschaltwerk 41 (Fig. 2) ist an der verschiebbaren Stabmagazinführung 30 angeordnet und greift in der üblichen Weise in eine entsprechende Magazinverzahnung ein. Die Länge der Stabmagazinführung 30 kann in weiten Grenzen frei gewählt werden, so dass auch die verwendbare Stabmagazinlänge im Rahmen der durch die Stabmagazinführung gegebenen Begrenzung frei gewählt werden kann.

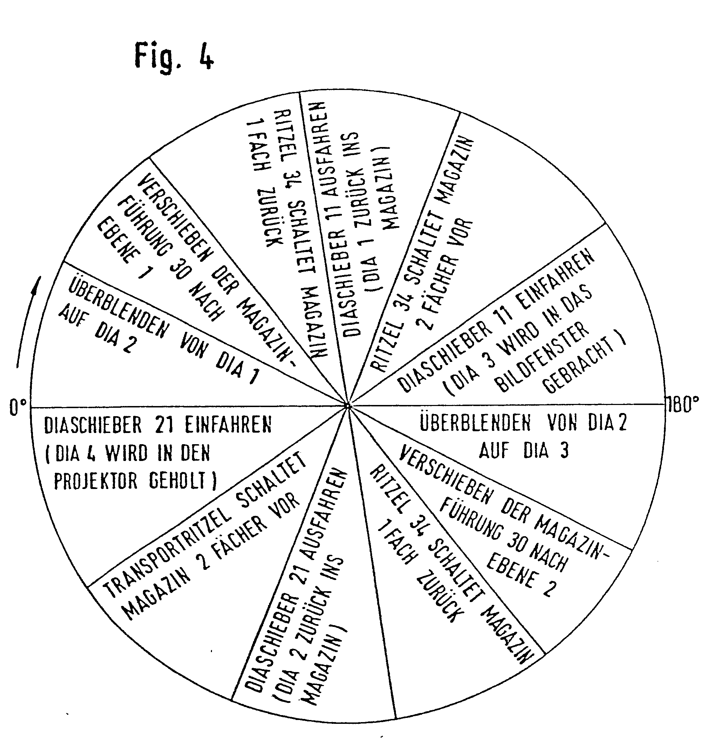

In der Fig. 4 ist die Funktionsaufeinanderfolge eines vollständigen Zyklus dargestellt, welcher das Wechseln zweier aufeinanderfolgender Dias umfasst. Es wird dabei davon ausgegangen, dass sich die Dias 1 und 2 in den Bildfenstern befinden und beim Start das Überblenden von Dia 1 auf Dia 2 beginnt. Nach dem Durchlaufen des halben Zyklus befinden sich die Dias 2 und 3 in den Bildfenstern, so dass bei erneutem Start das Dia 2 auf Dia 3 überblendet. Am Ende der zweiten Zyklushälfte befinden sich die Dias 3 und 4 in den Bildfenstern. Während eines vollständigen Zyklus über 360° wird die Magazinführung einmal nach vorne und einmal zurückbewegt und das Ritzel 34 erteilt dem Magazin 31 nach jedem halben Zyklus einen Zurück- und zwei Vorwärtsschritte. Auch die Diawechselschieber 11 und 12 treten in jedem Zyklus einmal in Funktion und zwar der Wechselschieber 11 in der ersten und der Wechselschieber 21 in der zweiten Zyklushälfte. Dadurch ergibt sich die Möglichkeit, die Greiferantriebe und den Antrieb der Stabmagazinführung 30 betrieblich auf einen zentralen Antrieb zurückzuführen, was nicht nur eine bedeutende Vereinfachung darstellt, sondern auch verhindert, dass das Triebwerk durch irgendwelche Umschaltvorgänge ausser Tritt gerät.

**Patentansprüche**

1. Überblend-Stehbildwerfer, bestehend aus 2 vollständigen Bildwerfersystemen, die einseitig neben dem gemeinsamen Stabmagazin angeordnet sind, in welchen die Dias in fortlaufender Projektionsfolge enthalten sind und nach der Projektion wieder in der ursprünglichen Reihenfolge eingeordnet werden, dadurch gekennzeichnet, dass die beiden Bildwerfer (I und II) fest, und in Achsrichtung derart gestaffelt angeordnet sind, dass der Dia-Wechselgreifer-Durchgang zwischen dem Magazin (31) und dem aussenliegenden Bildwerfer (II) durch den dem Magazin näheren Bildwerfer (I) stets freigegeben ist, und dass ein zusätzlicher Antrieb (35-39) für das Stabmagazin (31) oder dessen Stabmagazinführung (30) dem Schrittschaltwerk (41) derart überlagert ist, dass das Stabmagazin (31) beim Wechseln aufeinanderfolgender Dias um den Abstand der Bildwechselebenen (1', 2') der beiden Bildwerfer (I, II) vor- und zurückbewegbar ist.

2. Überblend-Stehbildwerfer nach Anspruch 1, dadurch gekennzeichnet, dass das Stabmagazin über ein Ritzel gleichzeitig sowohl um den Abstand der Bildwechselebenen der beiden Bildwerfer als auch um den Abstand für den Magazinschaltschritt vor- und zurückbewegbar ist.

3. Überblend-Stehbildwerfer nach Anspruch 2, dadurch gekennzeichnet, dass das Ritzel von einem Schaltschrittmotor antreibbar ist, der über eine Steuerelektronik beaufschlagbar ist.

4. Überblend-Stehbildwerfer nach Anspruch 1, dadurch gekennzeichnet, dass die angetriebene Stabmagazinführung (30) längs verschiebbar an den Bildwerfern (I, II) gelagert ist und ihrerseits den Magazinschaltschritt-Antrieb (34, 41) trägt.

5. Überblend-Stehbildwerfer nach Anspruch 4, dadurch gekennzeichnet, dass auch die Stabmagazinführung über ein Ritzel antreibbar ist.

**Claims**

1. Fade-in slide projector consisting of two complete projector systems arranged to one side of the joint strip magazine in which the slides are contained in consecutive projection sequence and to which they are returned in the original sequence after projection, characterised in that the two projectors (I and II) are arranged in a fixed position and staggered in axial direction in such a way that the slide change pick-up passage between the magazine (31) and the outer projector (II) is always left free by the projector (I) which is closer to the magazine, and in that an additional drive (35-39) for the strip magazine (31) or its strip magazine guide (30) is superimposed on the indexing mechanism (41) such that, during the changing of consecutive slides, the strip magazine (31) can be moved backwards and forwards by the distance between the picture change planes (1', 2') of the two projectors (I, II).

2. Fade-in slide projector according to claim 1, characterised in that the strip magazine can be moved backwards and forwards by means of a pinion both by the distance between the picture change planes of the two projectors and by the length of the magazine index step.

3. Fade-in slide projector according to claim 2, characterised in that the pinion may be driven from an indexing motor which may be acted upon by an electronic control system.

4. Fade-in slide projector according to claim 1, characterised in that the driven strip magazine guide (30) is arranged so as to be axially movable in relation to the projectors (I, II) and, in its turn, carries the magazine index drive (34, 41).

5. Fade-in slide projector according to claim 4, characterised in that also the strip magazine guide is drivable from a pinion.

## Revendications

1. Projecteur d'images fixes à fondu enchaîné se composant de deux systèmes projecteurs d'image complets qui sont agencés d'un seul côté, près du chargeur commun dans lequel les diapositives sont contenues dans leur ordre de projection et sont de nouveau rangées, après la projection, dans l'ordre initial, caractérisé en ce que les deux projecteurs (I et II) sont agencés à poste fixe et échelonnés en direction axiale, de façon que le passage du preneur-changeur de diapositives entre le chargeur (31) et le projecteur (II) en position extérieure soit constamment libéré par le projecteur (I) plus proche du chargeur, et en ce qu'un entraînement supplémentaire (35-39) pour le chargeur (31) ou sa glissière (30) est superposé au mécanisme de manœuvre pas à pas (41) de façon que, lors du changement de diapositives consécutives, le chargeur (31) puisse être déplacé vers l'avant et vers l'arrière de l'intervalle des plans de changement d'image (1', 2') des deux projecteurs (I, II).

2. Projecteur selon la revendication 1, caractérisé en ce que le chargeur est déplaçable en avant et en arrière, par l'intermédiaire d'un pignon, aussi bien de l'intervalle des plans de changement d'image des deux projecteurs que de l'intervalle du pas de manœuvre du chargeur.

3. Projecteur selon la revendication 2, caractérisé en ce que le pignon peut être actionné par un moteur pas à pas qui est piloté par une électronique de commande.

4. Projecteur selon la revendication 1, caractérisé en ce que la glissière (30) du chargeur entraînée, est montée coulissante longitudinalement sur les projecteurs (I, II) et porte de son côté l'entraînement (34, 41) de manœuvre pas à pas du chargeur.

5. Projecteur selon la revendication 4, caractérisé en ce que la glissière du magasin peut elle aussi être actionnée par l'intermédiaire d'un pignon.

Fig.1

Fig. 2

Fig. 3

0 023 945

# Fig. 4

VERSCHIEBEN DER MAGAZIN-FÜHRUNG 30 NACH EBENE 1

RITZEL 34 SCHALTET MAGAZIN 1 FACH ZURÜCK

DIASCHIEBER 11 AUSFAHREN (DIA 1 ZURÜCK INS MAGAZIN)

RITZEL 34 SCHALTET MAGAZIN 2 FÄCHER VOR

ÜBERBLENDEN VON DIA 1 AUF DIA 2

DIASCHIEBER 11 EINFAHREN (DIA 3 WIRD IN DAS BILDFENSTER GEBRACHT)

0°

180°

DIASCHIEBER 21 EINFAHREN (DIA 4 WIRD IN DEN PROJEKTOR GEHOLT)

ÜBERBLENDEN VON DIA 2 AUF DIA 3

TRANSPORTRITZEL SCHALTET MAGAZIN 2 FÄCHER VOR

VERSCHIEBEN DER MAGAZIN-FÜHRUNG 30 NACH EBENE 2

DIASCHIEBER 21 AUSFAHREN (DIA 2 ZURÜCK INS MAGAZIN)

RITZEL 34 SCHALTET MAGAZIN 1 FACH ZURÜCK

9